# FASCICULE DE BREVET EUROPEEN

(11) **EP 1 756 893 B1**
(45) Date de publication et mention de la délivrance du brevet: **19.10.2016**
(21) Numéro de dépôt: 05773269.5
(22) Date de dépôt: 19.05.2005
(51) Int. Cl.: H01M 4/04, H01M 4/64, H01M 4/66, H01M 6/02

(54) **COMPOSANT COMPRENANT UN COLLECTEUR D'ELECTRONS ET DE LA MATIERE ACTIVE, ET SON UTILISATION EN TANT QU'ELECTRODE DE BATTERIE**
KOMPONENTE MIT KOLLEKTORELEKTRODE UND AKTIVMATERIAL SOWIE DEREN VERWENDUNG ALS BATTERIEELEKTRODE
COMPONENT COMPRISING AN ELECTRON COLLECTOR AND AN ACTIVE MATERIAL, AND THE USE THEREOF AS A BATTERY ELECTRODE

(30) Priorité: 19.05.2004 FR 0405486
(43) Date de publication de la demande: 28.02.2007
(73) Titulaire: Electricité de France, 75008 Paris (FR)
(72) Inventeur: GRUGEON, Sylvie, F-60960 Feuquieres (FR); LARUELLE, Stéphane, F-80470 Saveuse (FR); TARASCON, Jean-Marie, F-91540 Mennecy (FR)
(74) Mandataire: Cabinet Plasseraud
(86) Numéro de dépôt international: PCT/FR2005/001256
(87) Numéro de publication internationale: WO 2005/114766

(56) Documents cités:
- EP-A- 0 829 913
- EP-A- 0 936 687
- EP-A- 1 113 511
- WO-A-93/11283
- US-A- 4 720 910
- US-A- 5 919 587
- US-A1- 2004 058 246

## Description

L'invention concerne un composant, que l'on peut qualifier de « collecteur - électrode », comprenant au moins un collecteur d'électrons et de la matière active. L'invention concerne aussi le procédé de fabrication et l'utilisation d'un tel composant, le plus souvent en tant qu'électrode de batterie en particulier au lithium.

L'extraordinaire essor du marché des appareils électroniques portables suscite en amont une émulation de plus en plus importante dans le domaine des batteries rechargeables ou accumulateurs. Outre le téléphone mobile qui connaît un développement fulgurant, les ventes des ordinateurs portables, avec une progression de 20% par an, impliquent de nouvelles exigences quant aux performances de leurs alimentations. A cela s'ajoute aussi l'expansion du marché des caméscopes, des appareils photos numériques, des baladeurs CD, des outils sans fils et de nombreux jouets qui requièrent de plus en plus souvent des batteries rechargeables. Enfin, il est probable que le XXIème siècle verra un développement considérable du véhicule électrique et des véhicules hybrides, dont l'émergence résulte de la réglementation internationale de plus en plus sévère quant aux émissions polluantes et à effet de serre des moteurs thermique.

Bien que le marché des accumulateurs soit de nos jours très attractif, il est cependant important de faire le bon choix afin de pouvoir se positionner pour la nouvelle génération d'appareils électroniques. En réalité, ce sont les progrès de l'électronique qui dictent le cahier des charges pour les accumulateurs de demain. Aux demandes d'accumulateurs plus autonomes s'est ajouté ces dernières années, en raison de la miniaturisation, le désir d'avoir des accumulateurs plus minces et flexibles.

La terminologie lithium métal (ou Li métal) définit généralement la technologie dans laquelle l'anode ou électrode négative comprend du métal, l'électrolyte contient des ions lithium, et la cathode ou électrode positive comprend au moins un matériau réagissant électrochimiquement de façon réversible avec le lithium. Le matériau réagissant électrochimiquement de façon réversible avec le lithium est par exemple un matériau d'insertion, contenant ou non du lithium. L'électrolyte contient généralement des ions lithium, que l'électrolyte soit liquide ou polymère chargé en sel de lithium - on parle alors dans ce dernier cas généralement de polymère sec.

La terminologie lithium ion (Li ion) définit généralement la technologie dans laquelle la cathode comprend un matériau d'insertion comprenant du lithium, l'anode comprend au moins un matériau réagissant électrochimiquement de façon réversible avec le lithium, et l'électrolyte contient des ions lithium. Le matériau réagissant électrochimiquement de façon réversible avec le lithium est par exemple un matériau d'insertion, contenant ou non du lithium, ou du carbone. L'électrolyte contient généralement des ions lithium, que ce soit sous forme liquide ou sous forme de polymère imprégné de liquide - on parle alors dans ce dernier cas généralement d'électrolyte plastique.

La technologie lithium métal, ainsi que la technologie lithium ion, sont susceptibles d'apporter la flexibilité recherchée, mais restent à des prix élevés compte tenu de la nature des matériaux employés et d'un niveau de sécurité, en cas de défaut interne ou externe, insuffisant. Par ailleurs, le prix et la sécurité des accumulateurs lithium ion restent des verrous majeurs pour leur commercialisation sous la forme de batteries de plusieurs kWh sur le marché des véhicules électriques et hybrides.

Les inventeurs ont trouvé que, grâce à un composant à base de matière active et de collecteur, jouant le rôle d'électrode essentiellement sans ajout de matière conductrice secondaire ni de composé de type liant, il est possible de réaliser des accumulateurs possédant des performances comparables voire accrues en puissance et en énergie massique par rapport aux accumulateurs de l'art antérieur. Ceci est plus particulièrement vrai dans le cas d'un accumulateur au lithium, que ce soit pour une technologie Li métal ou une technologie Li ion.

L'invention concerne plus particulièrement le domaine des batteries rechargeables ou batteries secondaires ou accumulateurs. Mais elle peut aussi concerner le domaine des batteries primaires ou piles au Lithium.

Le composant selon l'invention est un composant comprenant au moins un collecteur d'électrons et de la matière électrochimiquement active, ladite matière active contenant au moins un métal appartenant au groupe des métaux de transition des groupes 4 à 12 de la Classification Périodique des Eléments, de préférence appartenant au groupe constitué du nickel, du cobalt, du manganèse, du cuivre, du chrome et du fer, de façon encore plus préférée du chrome, la matière active ayant au moins en partie, de préférence pratiquement en totalité, été formée à partir du collecteur et la matière active étant au moins en partie, de préférence pratiquement en totalité, en surface du collecteur d'électrons, et au moins une partie de la matière active comprenant au moins des nanoparticules d'au moins un composé du métal de transition ou des agglomérats desdites nanoparticules, les nanoparticules étant de taille moyenne de 1 à 1000 nm de préférence de 10 à 300 nm, et les agglomérats de nanoparticules étant de taille moyenne de 1 à 10000 nm de préférence de 10 à 3000 nm.

Par « collecteur » ou « collecteur d'électrons » selon l'invention, on entend une pièce qui collecte des électrons. Par « matière active » ou « matière électrochimiquement active », on entend selon l'invention une matière, qui peut être conductrice mais pas nécessairement car elle peut conduire les électrons par effet tunnel, dans laquelle se produit une activité électrochimique (réaction électrochimique qui implique des échanges d'électrons et d'ions avec la matière active) et/ou électrocapacitive par accumulation de charges (électrons). Par « composant » selon l'invention (appelé aussi « collecteur - électrode »), on entend selon l'invention un composant qui exerce à la fois une fonction de collecteur et une fonction de conversion d'énergie chimique en énergie électrique grâce à de la matière active. Par « collecteur - électrode », on entend ainsi selon l'invention un collecteur d'électrons qui a généralement sa propre activité électrochimique en terme de capacité, c'est-à-dire qui comprend de la matière électrochimiquement active.

Ainsi, un tel composant selon l'invention permet avantageusement d'obtenir une capacité (au sens électrochimique) en le baignant dans un électrolyte et en le cyclant, plus particulièrement vis-à-vis du lithium.

La matière active est de façon originale selon l'invention formée à partir du collecteur, c'est-à-dire générée par traitement du collecteur, par exemple par traitement sous air ainsi qu'il sera explicité dans le procédé de fabrication ci-après. Typiquement, le métal de transition issu du collecteur est transformé par traitement en composé de métal de transition, présent principalement en surface du collecteur.

Ainsi, selon l'invention, la matière active n'est pas apportée de l'extérieur sous forme de poudre sur un collecteur, par traitement avec un liant ou par dépôt, ainsi qu'il est connu de l'art antérieur. L'originalité technologique extrêmement forte de l'invention est que le composant selon l'invention peut assurer de façon particulièrement avantageuse une fonction d'électrode sans ajout de liant ou de conducteur électronique secondaire, comme dans le cas de l'art antérieur, même si de tel(s) ajout(s) reste(nt) possible(s). Ainsi, le composant selon l'invention n'est généralement pas un matériau composite comme dans l'art antérieur, et ne comprend généralement pas de composé organique.

L'invention simplifie donc énormément la fabrication et la mise en oeuvre d'électrodes supportées selon l'art antérieur, que ce soit en facilitant leur fabrication ou en réduisant leur coût de fabrication, tout en maintenant voire en améliorant leur tenue mécanique.

Les nanoparticules sont généralement et de préférence regroupées ou agglomérées en surface du collecteur, en agglomérats (de nanoparticules) ou particules, les agglomérats étant de taille moyenne de 1 à 10000 nm, de préférence de 10 à 3000 nm, ainsi qu'il a été montré par microscopie à balayage. L'ensemble des nanoparticules, agglomérées ou non, peut ainsi former avantageusement ce qu'on appelle une « couche de surface » selon l'invention. La couche de surface est de préférence principalement constituée de telles nanoparticules et/ou de tels agglomérats de nanoparticules, mais, plus généralement, elle peut aussi comporter d'autres constituants. Par suite, les nanoparticules aident avantageusement à augmenter de façon substantielle la surface active qui est mise en contact avec l'électrolyte durant le cyclage, lors d'une utilisation du composant selon l'invention en électrode. Lesdites particules sont généralement et de façon particulièrement avantageuse régulièrement distribuées à la surface du collecteur.

Par « nanostructuré », on qualifie selon l'invention une surface rugueuse et poreuse comportant des, de préférence constitué principalement de, nanoparticules ou agglomérats de nanoparticules tels que définis précédemment. Le composant selon l'invention est le plus souvent nanostructuré.

Le composé de métal de transition est généralement un composé inorganique de métal de transition. Ainsi, les nanoparticules comprennent le plus souvent, de préférence sont essentiellement constituées de, au moins un composé choisi parmi les composés inorganiques de métal de transition, c'est-à-dire les composés inorganiques comprenant au moins un métal de transition, de préférence en tant que cation.

De préférence, lesdites nanoparticules comprennent, de préférence consistent en, au moins un composé choisi parmi les chalcogénures de métal de transition et les halogénures de métal de transition, de façon encore plus préférée choisi parmi les chalcogénures de métal de transition. De préférence selon l'invention le composé inorganique de métal de transition est un oxyde de métal de transition.

Par « chalcogénure », on entend selon l'invention un composé inorganique dérivé d'un élément chalcogène, et par « chalcogène » on entend selon l'invention un élément choisi dans le groupe formé par l'oxygène, le soufre, le sélénium et le tellure. Ainsi les chalcogénures comprennent les oxydes. De préférence selon l'invention un chalcogénure est un oxyde ou un sulfure, et de façon encore plus préférée selon l'invention un chalcogénure est un oxyde. Par « halogénure », on entend usuellement et selon l'invention un fluorure, un chlorure, un iodure ou un bromure.

Dans un mode de réalisation de l'invention, le composé du métal de transition est de formule MₓO_{y}, dans lequel 1 ≤ x ≤ 3 et 1 ≤ y ≤ 5, de préférence 1 ≤ y ≤ 4, et M est au moins un métal de transition,
le composé de métal de transition étant de préférence de formule choisie :
dans le groupe formé par les structures spinelles AB₂O₄, où A est au moins un métal de transition choisi dans le groupe formé par Fe, Mn, Cr, Ni, Co et Cu, et B est au moins un métal choisi dans le groupe formé par Fe, Cr et Mn, et/ou
dans le groupe formé par les sesquioxydes M'₂O₃, où M' est au moins un métal de transition choisi dans le groupe formé par Fe, Mn, Cr, Ni, Co et Cu,
le composé de métal de transition étant de façon encore plus préférée de formule

   Feₓ, Cr_{y}, Mn_{z}, O₄,

   où :
   0 ≤ x' ≤ 1, 0 ≤ z' ≤ 1, et x' + y' + z' = 3, et/ou Cr₂O₃.

De préférence, la valence de M est de 2 ou 3, de préférence de 3. De préférence, la valence de M' est de 3. Les composés de formules Feₓ, Cr_{y}, Mn_{z}, O₄ englobent en particulier les composés de formule Feₓ, Cr₁₋ₓCr₂O₄.

Selon un mode de réalisation de l'invention, le composant comprend au moins en partie, de préférence en totalité, une couche de surface formée en majeure partie d'au moins un composé, de préférence inorganique, de métal de transition, la couche de surface comprenant de préférence au moins en partie des, de préférence étant principalement (i.e. généralement au moins 50% en poids) constituée de, nanoparticules ou agglomérats de nanoparticules d'au moins un composé de métal de transition, les nanoparticules et les agglomérats de nanoparticules étant tels que définis précédemment. La « couche de surface » a été définie précédemment. De préférence, ledit composé inorganique est, comme indiqué précédemment, un chalcogénure de métal de transition et/ou un halogénure de métal de transition. De façon encore plus préférée, ledit composé inorganique est un oxyde de métal de transition.

Selon ce mode de réalisation de l'invention, ladite couche de surface est généralement d'épaisseur de 30 à 15000 nm, de préférence de 30 à 12000 nm.

Selon un mode particulièrement préféré de réalisation du composant selon l'invention, le collecteur comprend un alliage de métaux contenant du chrome, par exemple un alliage de fer et de chrome. De préférence le collecteur comprend de l'acier inoxydable, c'est-à-dire est généralement composé d'un seul acier inoxydable ou de plusieurs aciers inoxydables. Le collecteur peut aussi comprendre de l'acier non inoxydable.

Un exemple de collecteur est un acier inoxydable de type AISI 304, par exemple tel que celui commercialisé par la société Goodfellow, qui comprend de nombreux constituants (dont du Mn à moins de 2% poids, du C à moins de 800 ppm poids) et majoritairement du Ni (8 à 11% poids), du Cr (17 à 20% poids) et du fer (balance en poids).

Par « acier inoxydable » (appelé communément « inox »), on entend selon l'invention un acier, c'est-à-dire un alliage de métaux comprenant du fer et du carbone (moins de 1,5% généralement), ledit acier inoxydable comprenant généralement, et de façon préférée selon l'invention, du chrome, avec une teneur en chrome généralement supérieure ou égale à 10,5 %. Ledit acier a le plus souvent une teneur en carbone généralement inférieure ou égale à 1,2 %. Un acier inoxydable peut comporter d'autres constituants d'alliage, et en particulier du nickel.

Le composant selon l'invention diffère de façon essentielle des constituants actifs supportés des accumulateurs au lithium connus (commerciaux ou non), qui doivent beaucoup à la structure ouverte des matériaux d'électrode actifs pour permettre l'insertion réversible des ions au cours du cyclage. Bien que ne présentant pas de structure semblable, les composants selon l'invention présentent une activité électrochimique en présence de Li avec des capacités importantes.

L'invention concerne aussi un procédé de fabrication d'un composant selon l'invention, ledit procédé comprenant au moins un traitement d'au moins un matériau présent dans un collecteur d'électrons, ledit matériau comprenant au moins un métal choisi parmi les métaux de transition des groupes 4 à 12 de la Classification Périodique des Eléments. Généralement selon un mode préféré selon l'invention, ledit traitement est choisi parmi les traitements haute température sous atmosphère réductrice, neutre ou oxydante. Lesdits traitements sont des traitements classiques, connus de l'homme du métier, et opèrent généralement en milieu(x) gazeux ou en milieu de sel(s) fondu(s). Le traitement peut être un traitement sous hydrogène à une température généralement de 500 à 1000°C, de préférence de 600 à 800°C, par exemple d'environ 700°C. De préférence, ledit traitement peut aussi être un traitement sous air à une température généralement de 600 à 1200°C, de préférence de 800 à 1150°C, par exemple d'environ 1000°C. Ces températures sont uniquement données à titre indicatif. L'homme du métier est à même d'adapter la température et la durée de traitement selon le cas. Par « traitement sous hydrogène » ou « traitement sous air », on entend selon l'invention un traitement en présence d'au moins un milieu gazeux comprenant de l'hydrogène ou de l'air, le complément pouvant être un autre gaz tel que l'azote. Par exemple le traitement se fait dans un mélange comprenant 90% d'azote et 10% d'hydrogène ou d'air (en volume).

Le composant selon l'invention peut être préalablement traité par au moins un prétraitement qui est généralement au moins une corrosion sous attaque acide et/ou au moins un dépôt chimique ou physique ou électrochimique et/ou au moins un traitement mécanique et/ou au moins un traitement afin d'en modifier la composition chimique et/ou au moins un traitement afin d'en modifier la surface développée.

L'invention concerne aussi l'utilisation d'au moins un composant, tel que décrit précédemment, en tant qu'électrode.

L'invention concerne de plus un supercondensateur comprenant au moins un composant selon l'invention ou fabriqué selon l'invention.

Un tel supercondensateur peut se présenter sous toutes les formes de supercondensateurs : hybride, pseudocondensateur, ou supercondensateur.

L'invention concerne en outre un accumulateur électrochimique comprenant au moins une électrode positive (ou cathode), et au moins une électrode négative (ou anode), caractérisé en ce qu'il comporte au moins un composant selon l'invention ou fabriqué selon l'invention.

De préférence, un tel accumulateur électrochimique est un accumulateur au lithium.

Ledit composant joue avantageusement le rôle d'électrode, de préférence d'anode. Par la suite, dans les exemples de type laboratoire, le lithium sert de potentiel de référence, donc ce qui servira en tant qu'anode dans l'accumulateur industriel est testé en tant que cathode dans l'exemple de type laboratoire.

Ledit accumulateur comprend généralement un séparateur, par exemple en fibre de verre, ainsi qu'il est connu de l'homme du métier.

Dans un premier mode de réalisation de l'invention, ledit accumulateur est un accumulateur de type lithium métal. Dans ce cas, ledit accumulateur comprend généralement au moins un électrolyte liquide comprenant au moins un sel, l'anode comprenant du lithium métal, et ledit accumulateur est caractérisé en ce que la cathode comprend ledit composant, la cathode étant de préférence principalement constituée dudit composant.

Dans ce premier mode de réalisation, généralement, ledit sel est un sel de lithium et/ou d'ammonium, de préférence de lithium.

Dans ce premier mode de réalisation, généralement, l'anode ou électrode négative comprend du lithium métal, et est de préférence à base de lithium métal, c'est-à-dire qu'elle comprend principalement du lithium métal. Mais de façon plus générale, l'électrode négative peut comprendre du lithium métallique, ou un alliage de lithium ainsi qu'il est connu de l'homme du métier.

L'électrolyte liquide comprend généralement au moins un sel ainsi qu'il est connu de l'homme du métier tel que par exemple un sel de lithium choisi dans le groupe formé par LiCF₃SO₃, LiclO₄, LiN (C₂F₅SO₂) ₂, LiN (CF₃SO₂)₂, LiAsF₆, LiSbF₆, LiPF₆, et LiBF₄, et/ou un sel d'ammonium tel que (C₄H₉)₄NClO₄. De préférence ledit sel est choisi dans le groupe formé par LiCF₃SO₃, LiClO₄, LiPF₆, et LiBF₉.

En général ledit sel est dissous dans un solvant organique anhydre, constitué généralement de mélanges en proportions variables de carbonate de propylène, de carbonate de diméthyle et de carbonate d'éthylène. Ainsi, ledit électrolyte comprend généralement, comme il est connu de l'homme du métier, au moins un carbonate, cyclique ou acyclique, de préférence cyclique selon l'invention. Par exemple, ledit électrolyte est du LP30, composé commercial de la société Merck comportant de l'EC ou Ethylène de Carbone, du DMC ou Di Méthyl Carbonate, et du sel LiPF6, la solution étant 1 molaire en sel et 50%/50% par poids en solvant.

Dans un second mode de réalisation de l'accumulateur selon l'invention, ledit accumulateur est un accumulateur de type lithium ion. Dans ce cas, généralement, l'électrolyte comprend au moins un sel, et la cathode ou électrode positive comprend du lithium le plus souvent en tant que source d'ions lithium, ledit accumulateur étant caractérisé en ce que l'anode comprend ledit composant, l'anode étant de préférence principalement constituée dudit composant.

Dans ce second mode de réalisation, généralement, ledit sel est un sel de lithium et/ou d'ammonium, de préférence de lithium.

Dans ce second mode de réalisation, la cathode ou électrode positive comprend généralement des matériaux d'insertion lithiés, sources d'ion Li⁺, ainsi qu'il est connu de l'homme du métier. Par exemple ladite cathode comprend au moins un composé de lithium, tel que LiCoO₂, LiFePO₄ ou un composé de type LiMX₂.

L'assemblage d'accumulateurs de type lithium métal se fait généralement pour des besoins d'expérimentation de laboratoire dans des configurations de type piles boutons. L'assemblage d'accumulateurs de type lithium ions se fait également généralement pour des besoins d'expérimentation de laboratoire dans des configurations de type piles boutons. Pour ce faire, on effectue l'empilement suivant. On place tout d'abord, au fond d'un boîtier de pile bouton, ledit composant sur lequel sont déposés successivement 1) un séparateur, de type séparateur fibre de verre, imbibé d'électrolyte, 2) un feuillet plastique (par exemple préparé selon la technologie Bellcore - tel que celui décrit dans l'exemple 4), contenant un matériau d'électrode positive contenant du lithium, puis 3) un disque d'acier non traité et 4) un ressort métallique. Par la suite, un couvercle est ajouté sur le dessus de la pile bouton et le tout est scellé mécaniquement, le plus souvent à l'aide d'une sertisseuse adaptée.

L'assemblage d'accumulateur de type lithium-ion pour un usage industriel se fait généralement à partir de l'empilement suivant. On dépose sur ledit composant successivement 1) un séparateur, de type séparateur fibre de verre, 2)un feuillet plastique (par exemple préparé selon la technologie Bellcore - tel que celui décrit dans l'exemple 4), contenant un matériau d'électrode positive contenant du lithium, 3) un feuillet d'aluminium, 4) un feuillet plastique (par exemple préparé selon la technologie Bellcore - tel que celui décrit dans l'exemple puis 5)un séparateur, de type séparateur fibre de verre. Le tout est enroulé sur une longueur déterminée puis ledit composant est introduit dans un godet métallique. Ledit composant est en contact électrique direct avec le godet métallique. Le couvercle du godet est soudé sur les feuillards d'aluminium. Le godet est ensuite rempli d'électrolyte liquide sous vide afin d'imprégner les différent films. Le couvercle est alors serti sur le godet.

L'invention concerne enfin l'utilisation d'un accumulateur tel que décrit précédemment pour véhicule hybride, véhicule électrique, application stationnaire (i.e. secours électrique ou stockage d'énergie pour les énergies renouvelables) ou équipement portable. Le véhicule hybride est un véhicule qui combine un moteur électrique et un moteur thermique.

L'invention sera mieux comprise et d'autres caractéristiques et avantages apparaîtront à la lecture de la description qui va suivre, donnée à titre non limitatif, par référence aux figures 1 à 11.
La figure 1 représente une coupe schématique d'un composant selon l'invention.
La figure 2 représente une coupe schématique d'un accumulateur selon l'invention de type lithium métal comprenant un composant selon l'invention.
La figure 3 représente schématiquement, en vue en perspective, un des éléments de la figure 2 qui est le composant selon l'invention.
La figure 4 représente, pour un accumulateur selon l'invention de la figure 2, le potentiel V (en volts) par rapport à celui du couple Li / Li+ en fonction de la capacité dudit accumulateur (C en mAh/cm²) à 55°C.
La figure 5 représente, pour le même accumulateur selon l'invention que celui étudié à la figure 4, la capacité dudit accumulateur (C en mAh/cm²), ainsi que la capacité d'un accumulateur comparatif, en fonction du nombre de cycles (N) à 55°C.
La figure 6 représente, pour un accumulateur selon l'invention de la figure 2, différent de celui étudié aux figures 4 et 5, la capacité en charge (T1) et en décharge (T2) dudit accumulateur (C en mAh/cm²) ainsi que la capacité d'un accumulateur comparatif, en fonction du nombre de cycles (N).
La figure 7 représente une coupe schématique d'un accumulateur selon l'invention de type lithium ion comprenant un composant selon l'invention.
La figure 8 représente, pour un accumulateur selon l'invention de type lithium ion, différent de celui étudié aux figures 4 et 5, la capacité dudit accumulateur (C en mAh/cm²) en fonction du nombre de cycles (N).
La figure 9 représente, pour un accumulateur selon l'invention, le potentiel V (en volts) par rapport à celui du couple Li / Li⁺ en fonction de la capacité dudit accumulateur (C en mAh/cm²) à 55°C.
La figure 10 représente la capacité C (mAh/cm²) de quatre accumulateurs selon l'invention en fonction du nombre de cycles (N).
La figure 11 représente la capacité C (mAh/cm²) d'accumulateurs (A et B) selon l'invention en fonction du nombre de cycles (N) ainsi que, pour comparaison, la capacité C (mAh/cm²) d'un accumulateur comparatif (Comp).

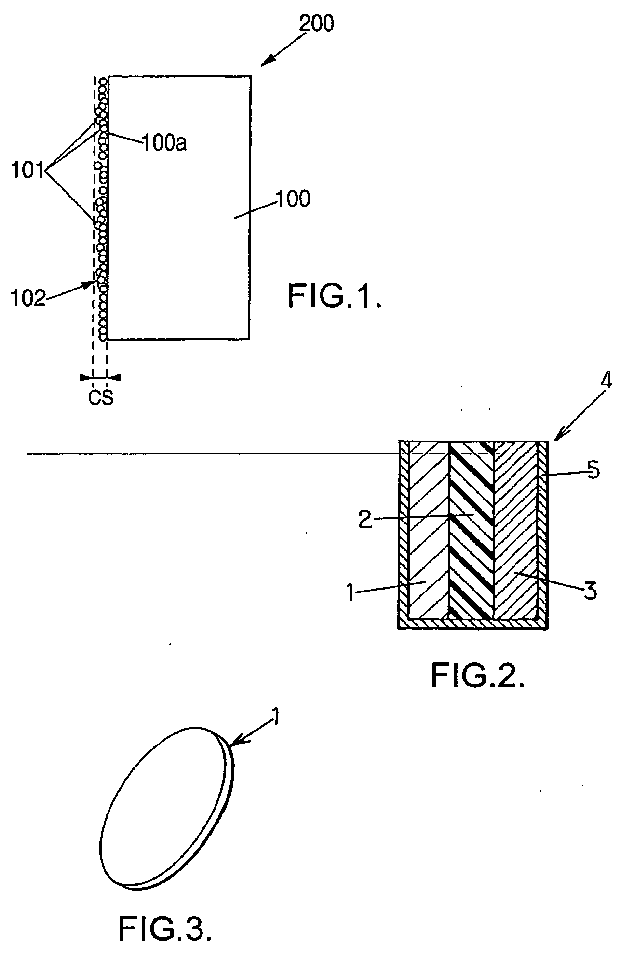

La figure 1 représente une coupe schématique d'un composant selon l'invention. Un tel composant 200 comporte un collecteur 100, typiquement en forme de disque vu sur sa tranche, à partir duquel ont été formées des nanoparticules 101 de matière active (qui sont grossies et indiquées arbitrairement comme étant de taille identique, pour simplifier la représentation schématique de la figure 1). L'ensemble 102 des nanoparticules 101 forme une couche 102 d'épaisseur maximale CS sur une surface 100a du collecteur 100. Plus cette couche 102 est épaisse, plus les nanoparticules 101 peuvent s'agglomérer (agglomérats non représentés). Cela a été réalisé par traitement, par exemple sous air à haute température, du collecteur 100 et en particulier de sa surface 100a. Le collecteur 100 est typiquement en acier inoxydable. Le chrome (Cr), le fer (Fe) et le manganèse (Mn), constituants du collecteur 100, ont réagi avec l'oxygène (O₂) de l'air pour former des oxydes principalement à base de chrome sous forme de nanoparticules 101. Aucune matière extérieure n'a été ajoutée, tel qu'un conducteur électronique secondaire ou un liant. Pourtant, le composant 200 tel quel peut servir d'électrode dans un accumulateur ou un supercondensateur.

La figure 2 représente une coupe schématique d'un accumulateur 4 selon l'invention de type lithium métal. L'accumulateur 4 comprend une anode ou électrode négative 3 (partie active) qui est à base de lithium métal, par exemple qui comprend sur toute sa surface faisant face à l'électrolyte une couche de Li métal, une partie 2 qui est un séparateur par exemple en fibre de verre imprégné d'électrolyte liquide qui est constitué par exemple de LP30, et une électrode positive 1 constituée d'un composant 1 selon l'invention placé de telle façon que les nanoparticules font face à la partie 2. Les pièces 1, 2 et 3 sont des disques vus en coupe. L'ensemble est serti dans un récipient 5 par exemple de type pile bouton, qui comporte un couvercle (non représenté ici).

La figure 3 représente schématiquement, en vue en perspective, un des éléments de la figure 2 qui est le composant de forme circulaire selon l'invention.

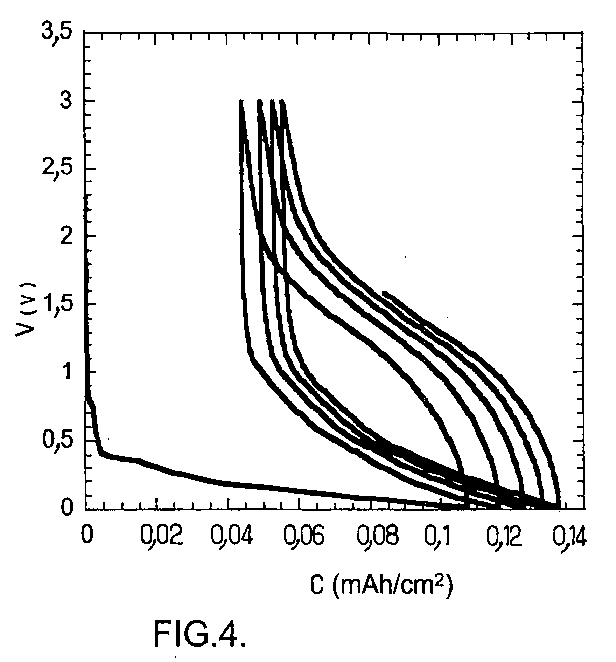

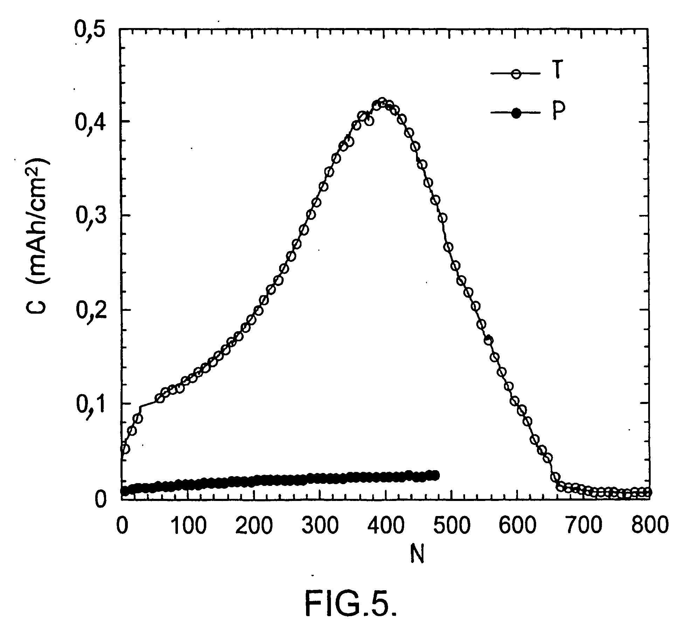

Les figures 4 et 5 sont commentées ci-après dans l'exemple 1.

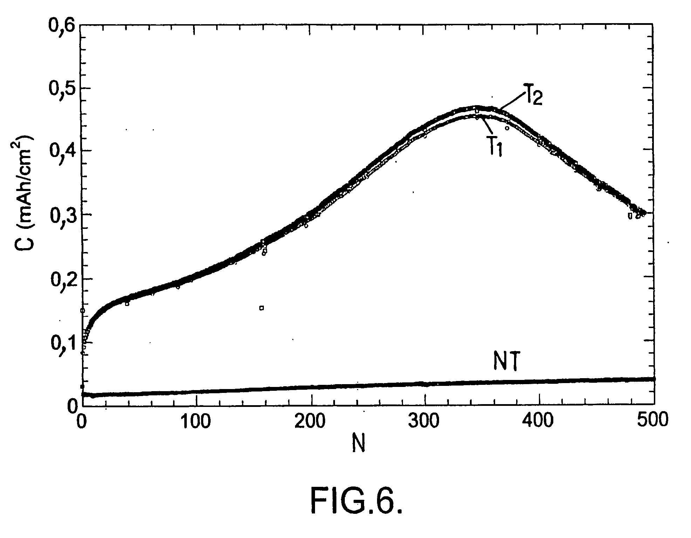

La figure 6 est commentée ci-après dans l'exemple 2.

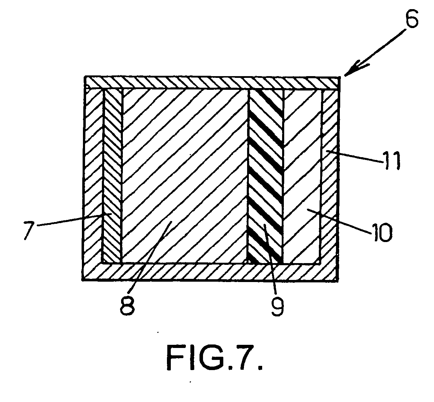

La figure 7 représente une coupe schématique d'un accumulateur 6 selon l'invention de type lithium ion. L'accumulateur 6 comprend une anode ou électrode négative 10 (partie active) constituée d'un collecteur 10 selon l'invention, une partie 9 qui est un séparateur par exemple en fibre de verre imprégné d'électrolyte liquide qui est constitué par exemple de LP30, un collecteur 7 de courant d'électrode positive, par exemple en aluminium, et une cathode 8 ou électrode positive contenant un matériau d'insertion aux ions lithium, par exemple LiFePO₄. L'anode 10 est placée de telle façon que les nanoparticules font face à la partie 9. Les pièces 7, 8, 9 et 10 sont des disques vus en coupe. L'ensemble est serti dans un récipient 11 par exemple de type pile bouton.

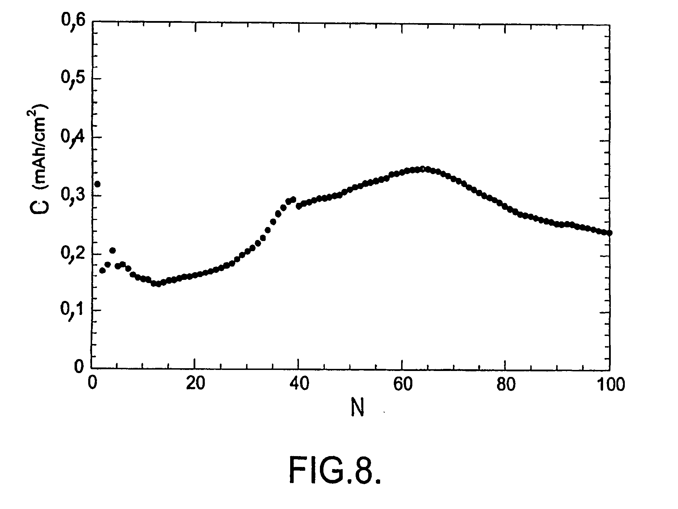

La figure 8 est commentée ci-après dans l'exemple 3.

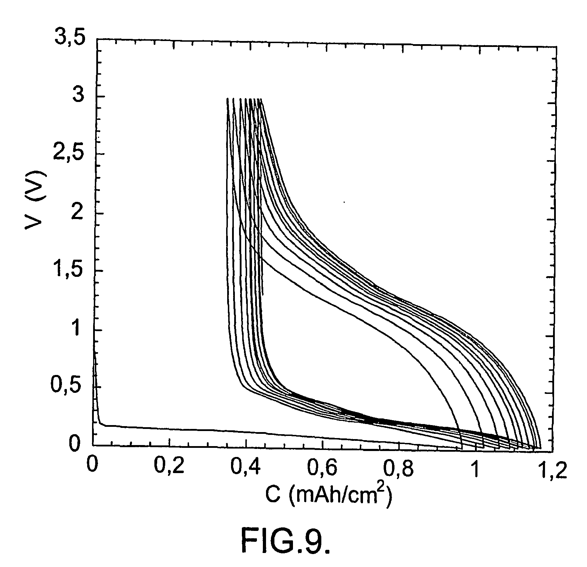

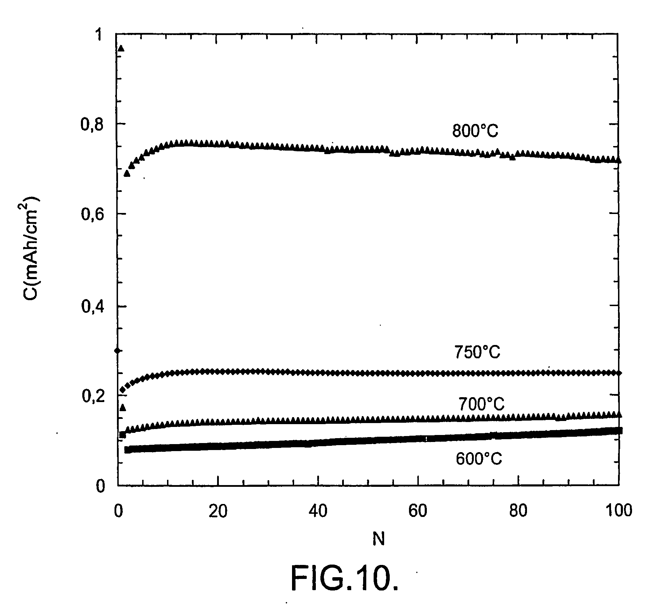

Les figures 9 et 10 sont commentées ci-après dans l'exemple 4.

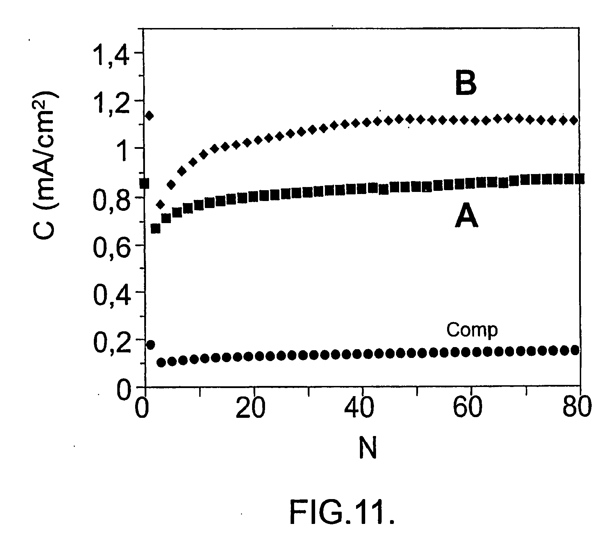

La figure 11 est commentée ci-après dans l'exemple 5.

### EXEMPLES

Les exemples qui suivent illustrent l'invention sans pour autant en limiter la portée.

### Exemple 1

On a pris un disque d'INOX AISI 304 commercialisé par la société Goodfellow de 1,8 cm² de surface (géométrique), poli et d'épaisseur 0,5 mm. Sa surface développée était égale à sa surface (géométrique) et était donc de 1,8 cm². Un tel disque a été chauffé sous un mélange d'azote contenant 10% en hydrogène à raison d'une élévation de 5°C par minute pour des températures allant de 25°C jusqu'à 700°C. La température a été maintenue à 700°C pendant 13 heures avant d'être abaissée à température ambiante (généralement d'environ 20°C) sans rampe. Par microscopie à balayage dudit disque AISI 304 poli avant et après traitement thermique, on a vu que la surface du disque était uniforme dans le cas du disque poli alors que dans le cas du disque poli puis traité, on voyait que la surface du disque contenait des particules d'environ 50 à 100 nm. Un tel disque poli puis traité comportait une surface développée estimée à environ 40 cm².

Ce disque poli puis traité, comportait donc en couche de surface un film nanostructuré composé essentiellement de Cr₂O₃ et de FeₓCr₁₋ₓCr₂O₄ (0≤x≤1), ledit film reposant sur une surface d'inox AISI 304. Ce disque a été inclus dans un accumulateur 4 tel que représenté sur la figure 2. Ledit accumulateur 4 comportait, dans un récipient 5, un disque poli puis traité 1, qui jouait le rôle d'électrode positive ou cathode 1, une partie d'électrolyte 2 qui était du LP30 imprégné dans un séparateur en fibre de verre sous forme de disque, et une électrode négative ou anode 3 en lithium sous forme de disque.

La figure 4 représente, pour un tel accumulateur selon l'invention de la figure 2, le potentiel V (en volts) par rapport à celui du couple Li / Li⁺ en fonction de la capacité dudit accumulateur (C en mAh/cm²) à 55°C. On y voit donc le comportement électrochimique d'un tel disque à 55°C cyclé avec du LP30 entre 0,02 et 3V à une densité de courant de 0,16 mA/cm2. La première décharge est caractérisée par une chute de potentiel jusqu'à 0,4V. Après cette chute, la courbe potentiel/capacité commence par être matérialisée par un petit plateau puis évolue vers une courbe de potentiel descendant lentement. Le disque AISI 304 poli puis traité, selon l'invention, avait donc une grande surface libre pour l'électrolyte. Cette surface jouait le rôle de catalyseur pour la dégradation de l'électrolyte ce qui peut expliquer en partie l'extra capacité. Quand l'électrolyte est complètement consommé ou qu'il y a empoisonnement de l'électrode avec les produits de dégradation, la capacité tombe pratiquement à zéro.

On voit donc que l'électro-activité est importante. En effet, des capacités d'environ 0,11 à 0,13 mAh par cm² à une densité de courant de 0,16mA/cm² ont pu être obtenues à 55°C en présence de l'électrolyte LP30 imprégnant un séparateur en fibre de verre. Poursuivant ce calcul à l'extrême, on voit que des surfaces développées de 400 et 800cm² donneraient des capacités respectivement de 0,7 et 1,4 mAh par cm².

La figure 5 représente, pour le même accumulateur selon l'invention que celui étudié ci-dessus à la figure 4, la capacité dudit accumulateur (C en mAh/cm²), ainsi que la capacité d'un accumulateur comparatif (comprenant le disque AISI 304 (P) poli puis non traité), en fonction du nombre de cycles (N) à 55°C. Ledit disque AISI 304 (P) poli puis non traité a été intégré dans un accumulateur dit comparatif de la même façon que l'a été le disque poli puis traité (T) selon l'invention. La figure 5 souligne l'évolution de la capacité en fonction du nombre de cycles d'un accumulateur comprenant le disque AISI 304 poli puis traité (T), selon l'invention, ainsi que celle de l'accumulateur comparatif. Nous notons qu'il y avait une grande différence de comportement entre l'accumulateur comparatif et l'accumulateur selon l'invention. La capacité de l'accumulateur selon l'invention comprenant le disque poli puis traité (T) a augmenté régulièrement jusqu'à environ 400 cycles, puis a décru jusqu'à environ 600 cycles, alors que la capacité de l'accumulateur comparatif n'a montré qu'une infime évolution durant le cyclage.

### Exemple 2

On a pris un disque d'INOX AISI 304 commercialisé par la société Goodfellow de 1,8 cm² de surface (géométrique), non poli et d'épaisseur 0,5 mm. Sa surface développée était à peu près égale à sa surface (géométrique) et était donc d'environ 1,8 cm². Un tel disque a été chauffé sous un mélange d'azote contenant 10% en hydrogène à raison d'une élévation de 5°C par minute pour des températures allant de 25°C jusqu'à 700°C. La température a été maintenue pendant 13 heures à 700°C avant d'être abaissée jusqu'à température ambiante (généralement d'environ 20°C) sans rampe. Par microscopie à balayage dudit disque AISI 304 non poli avant et après traitement thermique, on a vu que la surface du disque était approximativement plane dans le cas du disque non poli et non traité (NT) alors que dans le cas du disque non poli puis traité (courbe T1 en charge et courbe T2 en décharge), on a vu que la surface du disque contenait des particules de tailles supérieures à celles du disque initialement poli puis traité (T de l'exemple 1), allant de 100 à 300nm.

Un tel disque non poli puis traité comportait donc en couche de surface un film nanostructuré composé essentiellement de Cr₂O₃ et de FeₓCr₁₋ₓCr₂O₄ (0≤x≤1), ledit film reposant sur une surface d'inox AISI 304. Ce disque a été inclus dans un accumulateur 4 tel que représenté sur la figure 2. Ledit accumulateur 4 comportait un disque 1 qui jouait le rôle d'électrode positive ou cathode 1, un électrolyte 2 qui était du LP30, et une électrode négative ou anode 3 en lithium.

La figure 6 représente, pour ledit accumulateur selon l'invention de la figure 2, différent de celui étudié aux figures 4 et 5, la capacité en charge (T1) et en décharge (T2) dudit accumulateur (C en mAh/cm²), ainsi que la capacité d'un accumulateur comparatif (NT) (comportant un disque non poli et non traité), en fonction du nombre de cycles (N). Ledit disque AISI 304 (NT) non poli et non traité a été intégré dans un accumulateur dit comparatif de la même façon que l'a été le disque non poli puis traité (T1 ou T2) selon l'invention. On y voit le comportement électrochimique d'un accumulateur comprenant un disque AISI 304 non poli et traité (T1 ou T2) selon l'invention à 55°C cyclé avec du LP30 entre 0,02 et 3V à une densité de courant de 0,16 mA/cm2. La figure 6 montre l'évolution de la capacité en fonction du nombre de cycles de l'accumulateur selon l'invention comparée à celle de l'accumulateur comparatif (NT) obtenue pour ledit cyclage. Comme dans le cas de l'exemple 1, les capacités ont augmenté jusqu'à environ 0,45 mAh/cm2 après environ 400 cycles.

Notons qu'il est possible dans les deux cas de modifier la taille des particules (et donc l'épaisseur de la couche de surface) en modifiant soit les conditions en température (i.e. les conditions de chauffe et/ou de refroidissement) soit en agissant sur la surface avant le traitement généralement par une méthode de prétraitement telle que décrite précédemment.

Les mesures de MET (microcopie électronique à transmission) ont indiqué des nanoparticules plus grosses et aux contours mieux définis pour l'accumulateur comprenant un disque non poli puis traité (T1 ou T2) que pour l'accumulateur comprenant un disque poli puis traité (T). De plus, des analyses EDS (« Energy Dispersion Spectroscopy » en anglais, pour Microanalyse Elémentaire) ont semblé indiquer que, suite au traitement thermique, la surface a été fortement enrichie de chrome et de fer avec la diffusion du nickel dans la matrice AISI 304 métallique.

### Exemple 3

Un accumulateur électrochimique Li ion a été assemblé en pile bouton de façon à produire un accumulateur de type bouton, comprenant un disque AISI 304, non poli puis traité selon la procédure décrite dans l'exemple 2, comme électrode négative, un séparateur en fibre de verre imbibé de LP30, et une électrode constituée de matériaux LiFePO4 et carbone mélangés dans une matrice polymère comme électrode positive (cas d'une électrode positive plastique). L'électrode positive était constituée de 72,4% massique de LiFePO₄, de 7,85% massique de carbone et de 19,75% massique d'un polymère liant qui était du PVDF-HFP (pour Poly Vinyl DI Fluorure - Hexa Fluoro Propylène). Ainsi, le composant selon l'invention a joué le rôle d'anode ou d'électrode négative.

La figure 8 représente, pour un tel accumulateur selon l'invention de type lithium ion, différent de celui étudié aux figures 4 et 5, la capacité dudit accumulateur (C en mAh/cm²) cyclé entre 0,01 et 3,43V à 55°C, à une densité de courant de 0,16 mA/cm² en fonction du nombre de cycles (N).

On peut constater, sur la figure 8, que le comportement de cet accumulateur, de type lithium ion, était identique à celui des accumulateurs précédents, de type lithium métal, avec une bonne réversibilité comme on l'avait vu sur la figure 4 pour l'accumulateur de l'exemple 1. Ainsi, ce nouveau concept d'électrode peut être utilisé pour l'assemblage d'accumulateurs au lithium de configurations variables.

### Exemple 4

Un disque d'inox de type SUS316L, commercialisé par la société HOHSEN Corporation, de diamètre 1,6cm , non poli et d'épaisseur 0,5mm, a été nettoyé à l'alcool avant d'être chauffé dans un four tubulaire, non plus sous mélange azote/hydrogène comme dans les exemples 1 et 2, mais sous air. Le chauffage a été effectué à raison de 5°C par min jusqu'à 800°C puis maintenu pendant 13h à cette température avant d'être arrêté. Le refroidissement jusqu'à la température ambiante s'est effectué sans rampe.

Par microscopie électronique à balayage, la surface du disque avant traitement s'est révélée être approximativement plane alors que celle du disque traité thermiquement sous air présentait des particules de forme octaédrique (ou losange), de taille hétérogène pouvant atteindre 2000 nm, ainsi que des particules sous forme de plaquettes d'environ 10 000 nm de diamètre et 500 nm d'épaisseur. La composition des deux types de particules a été déterminée par microscopie électronique à transmission couplée à l'analyseur élémentaire EDS : les particules de forme octaédrique ont été caractérisées par une phase de structure spinelle de composition proche de Mn_{0,96}, Fe₀,₀₃Cr₂O₄ alors que les particules sous forme de plaquettes correspondaient à la phase bien cristallisée Cr₂O₃. Nous avons pu noter ici l'enrichissement de la phase de structure spinelle en Manganèse par rapport aux exemples 1 et 2.

Un tel disque d'acier inoxydable non poli puis traité sous air à 800°C comportait donc en une couche de surface un film constitué essentiellement d'oxydes principalement à base de chrome tels que Cr₂O₃ et Mn_{0,96}, Fe_{0,03}Cr₂O₄. Ce disque a été inclus dans un accumulateur 4 tel que représenté sur la figure 1. Ledit accumulateur 4 comportait un disque 1 qui jouait le rôle d'électrode positive ou cathode 1, un électrolyte 2 qui était du LP30 et une électrode négative ou anode 3 en Lithium.

La figure 9 représente pour un tel accumulateur selon l'invention le potentiel V (en Volts) par rapport à celui du couple Li/Li+ en fonction de la capacité dudit accumulateur (C en mAh/cm²) à 55°C. Le cyclage a été effectué avec du LP30, entre 0,02 et 3V à une densité de courant de 0,15mAh/cm². La première décharge est caractérisée par une chute de potentiel jusqu'à environ 0,15V puis la courbe de potentiel est matérialisée par un pseudo plateau descendant lentement pour atteindre une capacité d'environ 0,96 mAh/cm². Comparée aux exemples 1 et 2, l'électroactivité a été multipliée par un facteur légèrement supérieur à 3 pour une densité de courant appliquée quasi identique.

La figure 10 représente la capacité C (mAh/cm²) d'un tel accumulateur selon l'invention, en fonction du nombre de cycles (N), ainsi que les capacités de trois autres accumulateurs selon l'invention identiques au précédent à l'exception du fait que les températures du traitement thermique sous air des disques d'inox ont été modifiées, à savoir : 600°C, 700°C et 750°C au lieu de 800°C. Nous avons noté une grande différence de valeurs de capacités entre les différents accumulateurs soulignant l'influence de la température du traitement sur l'électroactivité de la couche de surface du disque d'acier. Quelques dizaines de degrés ont ainsi permis ici de multiplier l'électroactivité par un facteur 3.

### Exemple 5

Un disque d'inox de type SUS316L, commercialisé par la société HOHSEN Corporation, de diamètre 1,6cm et d'épaisseur 0,5mm, a été prétraité chimiquement dans le but d'augmenter la porosité de la surface et ainsi la surface électrochimiquement active. Le prétraitement s'est déroulé en trois étapes : 1) un nettoyage dans le THF (Tétra Hydro Furane), 2) une étape d'activation de 5 minutes dans une solution d'acide sulfurique (5% en volume), et 3) une oxydation chimique dans une solution d'acide adaptée à 60°C. Le bain était composé d'acide sulfurique (0,93M), de Na₂S₂O₃ (0, 0006M) et d'alcool propargylique C₃H₄O (0, 05M). Na₂S₂O₃ et C₃H₄O jouaient respectivement le rôle d'activateur et d'inhibiteur cathodique. La durée de la dernière étape 3) avait été fixée soit à 5 minutes, conduisant à l'échantillon noté A sur la figure 11, soit à 20 minutes, conduisant à l'échantillon noté B sur cette même figure 11. La caractérisation par microscopie électronique à balayage a révélé une évolution drastique de la morphologie de surface des échantillons traités avec l'apparition d'une surface très poreuse. Les mesures de la surface des disques traités réalisées par la technique BET utilisant le Krypton comme gaz absorbant affichaient respectivement des valeurs de 6m²/m² et 13m²/m² pour les échantillons A et B.

Ces deux disques A et B traités chimiquement ont subi ensuite un traitement thermique, selon l'invention, sous flux d'un mélange azote/hydrogène(10%) comme dans les exemples 1 et 2. Le chauffage a été effectué à raison de 5°C par min jusqu'à 700°C puis maintenu pendant 13h à cette température avant d'être arrêté. Le refroidissement jusqu'à la température ambiante s'est effectué sans rampe sous flux de ce même gaz.

La caractérisation par microscopie électronique à balayage de ces échantillons A et B, traités chimiquement puis thermiquement, a révélé également une surface très poreuse. Hormis la l'apparition de petits nodules métalliques, le traitement thermique n'a pas semblé induire de profonde modification sur la porosité de surface. Les mesures de surfaces réalisées par BET n'ont d'ailleurs pas révélé de différences significatives.

Les disques d'acier inoxydable notés A et B, traités chimiquement puis thermiquement sous flux de mélange azote /hydrogène à 700°C, comportaient en couche de surface un film constitué essentiellement d'oxydes principalement à base de chrome tels que Cr₂O₃ et FeₓCr₁₋ₓCr₂O₄ (0≤x≤1). Chacun de ces disques a été inclus dans un accumulateur 4 tel que représenté sur la figure 1. Ledit accumulateur 4 comportait un disque 1 qui jouait le rôle d'électrode positive ou cathode 1, un électrolyte 2 qui était du LP30 et une électrode négative ou anode 3 en Lithium.

La figure 11 représente la capacité (mAh/cm²) d'accumulateurs contenant les disques A ou B en fonction du nombre de cycles (N), ainsi que, pour comparaison, la capacité d'un accumulateur dont le disque SUS316L n'a pas subi de traitement chimique avant le traitement thermique sous flux de mélange azote /hydrogène à 700°C. Le cyclage a été effectué avec du LP30, à 55°C entre 0,02 et 3V à une densité de courant de 0,15mAh/cm². Nous avons noté une grande différence de valeurs de capacités entre l'accumulateur ne comprenant pas de disque prétraité chimiquement, et les accumulateurs comprenant les disques notés A ou B présentant une grande surface. Un prétraitement chimique a donc permis de multiplier les capacités par un facteur d'environ 5. La figure 11 souligne également l'influence de la durée de la troisième étape du prétraitement chimique : La capacité est passée de 0,8 à 1, lmAh/cm² en augmentant la durée de ce traitement de 5 à 20 minutes.

## Revendications

1. Composant (1 ; 10 ; 200) comprenant au moins un collecteur d'électrons (100) et de la manière électrochimiquement active (102), ladite matière active (102) contenant au moins un métal appartenant au groupe des métaux de transition des groupes 4 à 12 de la Classification Périodique des Eléments, de préférence appartenant au groupe constitué du nickel, du cobalt, du manganèse, du cuivre, du chrome et du fer, de façon encore plus préférée du chrome, la matière active (102) ayant été formée à partir du collecteur (100) et la matière active (102) étant en surface (100a) du collecteur d'électrons (100), et au moins une partie de la matière active (102) comprenant au moins des nanoparticules (101) d'au moins un composé du métal de transition ou des agglomérants desdites nanoparticles (101), les nanoparticules (101) étant de taille moyenne de 1 à 1000 nm de préférence de 10 à 300 nm, et les agglomérats de nanoparticules (101) étant de taille moyenne de 1 à 10000 nm de préférence de 10 à 3000 nm.

2. Composant (1 ; 10 ; 200) selon la revendication 1 tel que le composé de métal de transition est un composé inorganique de métal de transition, de préférence choisi dans le groupe formé les chalcogénures de métal de transition et les halogénures de métal de transition, de façon encore plus préférée choisi dans le groupe formé par les chalcogénures de métal de transition.

3. Composant (1; 10 ; 200) selon la revendication 2 tel que le composé inorganique de métal de transition est un oxyde de métal de transition.

4. Composant (1 ; 10 ; 200) selon l'une des revendications 2 ou 3 dans lequel le composé du métal de transition est de formule M,O_{y}, dans lequel 1< x ≤ 3 et 1 ≤ y ≤ 5, de préférence 1 ≤ y ≤ 4, et M est au moins un métal de transition, le composé de métal de transition étant de préférence de formule choisie : dans le groupe formé par les structures spinelles
AB₂0₄, où A est au moins un métal de transition choisi dans le groupe formé par Fe, Mn, Cr, Ni, Co et
Cu, et B est au moins un métal choisi dans le groupe formé par Fe, Cr et Mn, et/ou dans le groupe formé par les sesquioxydes M¹₂O₃), où M' est au moins un métal de transition choisi dans la groupe formé par Fe, Mn, Cr, Ni, Co et Cu, le composé de métal de transition étant de façon encore plus préférée de formule
Feₓ,Cry, Mn_{z},0₄,
où:
0 ≤ x' ≤ 1, 0 ≤ z' ≤ 1, et x' **+** y' + z' = 3, et/ou Cr₂0₃.

5. Composant (1 ; 10 ; 200) selon l'une des revendications 1 à 4 comprenant en totalité, une couche de surface formée en majeure partie d'au moins un composé, de préférence inorganique, de métal de transition, la couche de surface étant principalement constituée de, nanoparticules (109) ou agglomérats de nanoparticules (102) d'au moins un composé de métal de transition, les nanoparticules (102) et les agglomérats de nanoparticules (102) étant tels que définis dans la revendication 1.

6. Composant (1 ; 10 ; 200) selon la revendication précédente tel que ladite couche de surface est d'épaisseur de 30 à 15000 nm, de préférence de 30 à 12000 fim.

7. Composant (1 ; 10 ; 200) selon l'une des revendications précédentes tel que le collecteur comprend de l'acier inoxydable.

8. Procédé de fabrication d'un composant (1 ; 10 ; 200) selon l'une des revendications précédentes comprenant au moins un traitement d'au moins un matériau présent dans un collecteur d'électrons, ledit matériau comprenant au moins un métal choisi parmi les métaux de transition des groupes 4 à 12 de la Classification Périodique des Éléments, ledit traitement étant un traitement haute température pendant une durée et à une température suffisante pour convertir une partie du collecteur (100) en matière électrochimiquement active (102).

9. Utilisation d'au moins un composant (1,8) selon l'une des revendications 1 à 7 ou fabriqué selon la revendication 8, en tant qu'électrode.

10. Supercondensateur comprenant au moins un composant (1,8) selon l'une des revendication 1 à 7 ou fabriqué selon la revendication 8.

11. Accumulateur électrochimidique (4,6), de préférence un accumulateur au lithium, comprenant au moins une électrode positive (ou cathode) (1, 8), et au moins une électrode négative (ou anode) (3.6) **caractérisé en ce qu'** il comporte au moins un composant (1,8) selon l'une des revendications 1 à 7 ou fabriqué selon la revendication 8.

12. Accumulateur (4) selon la revendication précédente comprenant au moins un électrolyte (2) liquide comprenant au moins un sel, l'anode (3) comprenant du lithium métal, ledit accumulateur (4) étant **caractérisé en ce que** la cathode (1) comprend ledit composant (1), la cathode (1) étant de préférence essentiellement constituée dudit composant. (1).

13. Accumulateur (6) selon la revendication 11 tel que l'électrolyte (9) comprend au moins un sel, et la cathode (8) comprend du lithium, ledit accumulateur (6) étant **caractérisé en ce que** l'anode (10) comprend ledit composant (10), l'anode (10) étant de préférence essentiellement constituée dudit composant (10).

14. Utilisation d'un accumulateur (4,6) selon l'une des revendications 11 à 13 pour véhicule hybride, véhicule électrique, application stationnaire ou équipement portable.

## Patentansprüche

1. Komponente (1; 10; 200) mit mindestens einem Elektronenkollektor (100) und elektrochemischem Aktivmaterial (102), wobei das Aktivmaterial (102) mindestens ein Metall enthält, das zur Gruppe der Übergangsmetalle der Gruppen 4 bis 12 des Periodensystems der Elemente gehört, das vorzugsweise zur Gruppe gehört, die aus Nickel, Kobalt, Mangan, Kupfer, Chrom und Eisen, mehr bevorzugt aus Chrom, besteht, wobei das Aktivmaterial (102) aus dem Kollektor (100) gebildet wurde und wobei sich das Aktivmaterial (102) auf der Oberfläche (100a) des Elektronenkollektors (100) befindet, und wobei mindestens ein Teil des Aktivmaterials (102) mindestens Nanoteilchen (101) mindestens einer Verbindung des Übergangsmetalls oder Agglomerate dieser Nanoteilchen (101) umfasst, wobei die Nanoteilchen (101) eine mittlere Größe von 1 bis 1000 nm, vorzugsweise 10 bis 300 nm, aufweisen, und wobei die Agglomerate von Nanoteilchen (101) eine mittlere Größe von 1 bis 10000 nm, vorzugsweise 10 bis 3000 nm, aufweisen.

2. Komponente (1; 10; 200) nach Anspruch 1,
wobei die Übergangsmetallverbindung eine anorganische Übergangsmetallverbindung ist, welche vorzugsweise aus der Gruppe ausgewählt ist, die aus Übergangsmetall-Chalcogeniden und Übergangsmetall-Halogeniden gebildet wird, und welche mehr bevorzugt aus der Gruppe ausgewählt ist, die aus Übergangsmetall-Chalcogeniden gebildet wird.

3. Komponente (1; 10; 200) nach Anspruch 2,
wobei die anorganische Übergangsmetallverbindung ein Übergangsmetalloxid ist.

4. Komponente (1; 10; 200) nach einem der Ansprüche 2 oder 3,
wobei die Übergangsmetallverbindung die Formel MₓO_{y} aufweist, wobei 1 < x ≤ 3 und 1 ≤ y ≤ 5, vorzugsweise 1 ≤ y ≤ 4, und wobei M mindestens ein Übergangsmetall ist, wobei die Übergangsmetallverbindung vorzugsweise eine Formel aufweist, welche ausgewählt ist: aus der Gruppe, die durch die Spinellstrukturen AB₂O₄ gebildet wird, wobei A mindestens ein Übergangsmetall ist, das aus der Gruppe ausgewählt ist, die durch Fe, Mn, Cr, Ni, Co und Cu gebildet wird, und B mindestens ein Metall ist, das aus der Gruppe, die durch Fe, Cr und Mn gebildet wird, und/oder aus der Gruppe ausgewählt ist, die durch die Sesquioxide m'₂O₃ gebildet wird, wobei M' mindestens ein Übergangsmetall ist, das aus der Gruppe ausgewählt ist, die durch Fe, Mn, Cr, Ni, Co und Cu gebildet wird, wobei die Übergangsmetallverbindung noch mehr bevorzugt die Formel Fe_{x'}Cr_{y'}Mn_{z'}O₄ aufweist, wobei: 0 ≤ x' ≤ 1, 0 ≤ z' ≤ 1 und x' + y' + z' - 3, und/oder Cr₂O₃.

5. Komponente (1; 10; 200) nach einem der Ansprüche 1 bis 4,
umfassend insgesamt eine Oberflächenschicht, die hauptsächlich aus mindestens einer, vorzugsweise anorganischen, Übergangsmetallverbindung gebildet ist, wobei die Oberflächenschicht vorwiegend aus Nanoteilchen (102) oder Agglomeraten von Nanoteilchen (102) mindestens einer Übergangsmetallverbindung besteht, wobei die Nanoteilchen (102) und die Agglomerate von Nanoteilchen (102) wie in Anspruch 1 definiert sind.

6. Komponente (1; 10; 200) nach dem vorhergehenden Anspruch,
wobei die Oberflächenschicht eine Dicke von 30 bis 15000 nm, vorzugsweise 30 bis 12000 nm, aufweist.

7. Komponente (1; 10; 200) nach einem der vorhergehenden Ansprüche,
wobei der Kollektor Edelstahl umfasst.

8. Verfahren zur Herstellung einer Komponente (1; 10; 200) nach einem der vorhergehenden Ansprüche, umfassend mindestens eine Behandlung mindestens eines Materials, das in einem Elektronenkollektor vorhanden ist, wobei das Material mindestens ein Metall umfasst, das aus den Übergangsmetallen der Gruppen 4 bis 12 des Periodensystems der Elemente ausgewählt wird, wobei die Behandlung eine Hochtemperaturbehandlung während einer Dauer und mit einer Temperatur ist, die ausreicht, um einen Teil des Kollektors (100) in ein elektrochemisches Aktivmaterial (102) überzuführen.

9. Verwendung mindestens einer Komponente (1, 8) nach einem der Ansprüche 1 bis 7, oder die nach Anspruch 8 hergestellt ist, als Elektrode.

10. Superkondensator, welcher mindestens eine Komponente (1, 8) nach einem der Ansprüche 1 bis 7, oder die nach Anspruch 8 hergestellt ist, umfasst.

11. Elektrochemischer Akkumulator (4, 6), vorzugsweise Lithium-Akkumulator, umfassend mindestens eine positive Elektrode (oder Kathode) (1, 8) und mindestens eine negative Elektrode (oder Anode) (3, 6),
**dadurch gekennzeichnet, dass** dieser mindestens eine Komponente (1, 8) nach einem der Ansprüche 1 bis 7, oder die nach Anspruch 8 hergestellt ist, umfasst.

12. Akkumulator (4) nach dem vorhergehenden Anspruch,
umfassend mindestens einen flüssigen Elektrolyten (2), der mindestens ein Salz umfasst, wobei die Anode (3) Lithiummetall umfasst,
wobei der Akkumulator (4) **dadurch gekennzeichnet ist, dass** die Kathode (1) die Komponente (1) umfasst, wobei die Kathode (1) vorzugsweise im Wesentlichen aus der Komponente (1) besteht.

13. Akkumulator (6) nach Anspruch 11,
wobei der Elektrolyt (9) mindestens ein Salz umfasst, und die Kathode (8) Lithium umfasst,
wobei der Akkumulator (6) **dadurch gekennzeichnet ist, dass** die Anode (10) die Komponente (10) umfasst, wobei die Anode (10) vorzugsweise im Wesentlichen aus der Komponente (10) besteht.

14. Verwendung eines Akkumulators (4, 6) nach einem der Ansprüche 11 bis 13 für ein Hybridfahrzeug, ein Elektrofahrzeug, eine stationäre Anwendung oder eine tragbare Ausrüstung.

## Claims

1. A component (1; 10; 200) comprising at least one electron collector (100) and electrochemically active material (102), said active material (102) containing at least one metal belonging to the group of transition metals of Groups 4 to 12 of the Periodic Table of the Elements, preferably belonging to the group consisting of nickel, cobalt, manganese, copper, chromium and iron, even more preferably chromium, the active material (102) having been formed from the collector (100) and the active material (102) being on the surface (100a) of the electron collector (100), and at least some of the active material (102) comprising at least nanoparticles (101) of at least one transition metal compound or agglomerates of said nanoparticles (101), the nanoparticles (101) having a mean size of 1 to 1000 nm, preferably 10 to 300 nm, and the agglomerates of nanoparticles (101) having a mean size of 1 to 10000 nm, preferably 10 to 3000 nm.

2. The component (1; 10; 200) according to claim 1, wherein the transition metal compound is an inorganic transition metal compound, preferably selected from the group formed by transition metal chalcogenides and transition metal halides, even more preferably selected from the group consisting of the transition metal chalcogenides.

3. The component (1; 10; 200) according to claim 2, wherein the inorganic transition metal compound is a transition metal oxide.

4. The component (1; 10; 200) according to claim 2 or 3, wherein the transition metal compound is of formula MₓO_{y}, in which 1 < x ≤ 3 and 1 ≤ y ≤ 5, preferably 1 ≤ y ≤ 4" and M is at least one transition metal, the transition metal compound preferably being of formula selected: from the group formed by spinel type structures
AB₂O₄, wherein A is at least one transition metal selected from the group formed by Fe, Mn, Cr, Ni, Co and
Cu, and B is at least one metal selected from the group formed by Fe, Cr and Mn; and/or from the group formed by sesquioxides M'₂O₃, wherein M' is at least one transition metal selected from the group formed by Fe, Mn, Cr, Ni, Co and Cu, the transition metal compound being even more preferably of formula
Fe_{x'}Cr_{y},Mn_{z},O₄,
wherein:
0 ≤ x' ≤ 1, 0 ≤ z' ≤ 1, and x' + y' + z' = 3, and/or Cr₂O₃.

5. The component (1; 10; 200) according to anyone of claims 1 to 4, comprising entirely, a surface layer formed predominantly from at least one transition metal compound, preferably inorganic, the surface layer mainly being constituted of, nanoparticles (102) or agglomerates of nanoparticles (102) of at least one transition metal compound, the nanoparticles (102) and the agglomerates of nanoparticles (102) being as defined in claim 1.

6. The component (1; 10; 200) according to the precedent claim, wherein said surface layer has a thickness of 30 to 15000 nm, preferably 30 to 12000 nm.

7. The component (1; 10; 200) according to any one of the precedent claims, such that the collector comprises stainless steel.

8. A process for manufacturing a component (1; 10; 200) according to any one of the precedent claims, comprising at least a treatment of at least one material present in an electron collector, said material comprising at least one metal selected from the transition metals of Groups 4 to 12 of the Periodic Table of the Elements, said treatment being a high-temperature treatment for sufficient a period of time and temperature to convert a part of the collector (100) in electrochemically active material (102).

9. Use of at least one component (1, 8) according to any one of claim s1 to 7 or manufactured according to claim 8, as an electrode.

10. A supercapacitor comprising at least one component (1, 8) according to any one of claim s1 to 7 or manufactured according to claim 8.

11. An electrochemical accumulator (4, 6), preferably a lithium accumulator, comprising at least one positive electrode (or cathode) (1, 8), and at least one negative electrode (or anode) (3, 6), **characterized in that** it includes at least a component (1, 8) according to any one of claim s1 to 7 or manufactured according to claim 8.

12. The accumulator (4) according to the precedent claim comprising at least a liquid electrolyte (2) comprising at least a salt, the anode (3) comprising lithium metal, said accumulator (4) being **characterized in that** the cathode (1) comprises said component (1), the cathode (1) preferably being essentially constituted of said component (1).

13. The accumulator (6) according to claim 11, wherein the electrolyte (9) comprises at least a salt, and the cathode (8) comprises lithium, said accumulator (6) being **characterized in that** the anode (10) comprises said component (10), the anode (10) preferably being essentially constituted of said component (10).

14. Use of an accumulator (4, 6) according to any one of claims 11 to 13 for a hybrid vehicle, an electric vehicle, a stationary application or for portable equipment.
